# FASCICULE DE BREVET EUROPEEN

(11) **EP 2 614 242 B1**
(45) Date de publication et mention de la délivrance du brevet: **21.01.2015**
(21) Numéro de dépôt: 11773056.4
(22) Date de dépôt: 08.09.2011
(51) Int. Cl.: F02C 7/27, F02K 9/30, F02K 9/78, F42B 15/10, F02K 9/00, F41A 33/02

(54) **SYSTEME DE PROPULSION POUR ENGIN VOLANT, EN PARTICULIER POUR MISSILE**
ANTRIEBSSYSTEM FÜR EIN FAHRZEUG, INSBESONDERE FÜR EINE RAKETE
PROPULSION SYSTEM FOR AN AIRCRAFT, IN PARTICULAR FOR A MISSILE

(30) Priorité: 10.09.2010 FR 1057214
(43) Date de publication de la demande: 17.07.2013
(73) Titulaire: Microturbo, 31200 Toulouse (FR); MBDA France, 92358 Le Plessis Robinson Cedex (FR); ROXEL France, 33167 Saint Medard en Jalles (FR)
(72) Inventeur: GUYADER, Gilles, Aimé, Yann, F-31330 Saint Cezert (FR); RIDEAU, Jean-François, F-31170 Tournefeuille (FR); PFIFFER, André, F-33160 Saint Médard en Jalles (FR); DOUALLE, Jean-François, F-91400 Orsay (FR)
(74) Mandataire: Gevers France
(86) Numéro de dépôt international: PCT/FR2011/052063
(87) Numéro de publication internationale: WO 2012/032273

(56) Documents cités:
- FR-A1- 2 649 757
- JP-A- 10 115 255
- US-A- 2 676 457
- US-A- 2 960 824

## Description

La présente invention concerne un système de propulsion destiné à propulser un engin volant, en particulier un missile antichar.

Dans le cadre de la présente invention, ledit système de propulsion comporte un turboréacteur qui comprend, de façon usuelle, au moins un compresseur, une chambre de combustion, une turbine et une tuyère d'éjection.

Pour améliorer les performances d'un tel système de propulsion, notamment au moment de la montée en vitesse initiale, il est connu d'ajouter au turboréacteur un accélérateur de type moteur fusée à poudre.

Cette solution consiste donc à associer deux types de propulseur différents. Ces deux types particuliers de propulseur présentent des contraintes de conception opposées, à savoir notamment un fort débit d'air avec des niveaux de température (1300 K) et de pression (6 bar) faibles pour le turboréacteur, et un faible débit d'air avec des niveaux de température (2500 K) et de pression (100 bar) élevés pour le moteur fusée.

Ces contraintes de conception opposées sont bien entendu un frein à l'intégration de ces deux types de propulseur au sein d'un seul et même système de propulsion.

Aussi, les solutions usuelles sont constituées d'associations d'architectures propulsives distinctives (turboréacteur et accélérateur à poudre largable), ne présentant aucun caractère d'intégration.

Généralement, les solutions usuelles contiennent des dispositifs accélérateurs, agencés latéralement ou à l'arrière, qui sont largués à la fin de leur utilisation. Un tel largage interdit l'emploi d'un système de propulsion de ce type sur un missile antichar ou antinavire léger pour une utilisation sur un théâtre d'opérations tactiques. Cette interdiction est due à la mise en danger de troupes amies, lors de la retombée non maitrisée sur le champ d'opérations de l'accélérateur, au terme de la phase d'accélération.

Par conséquent, un tel système de propulsion n'est pas possible pour la motorisation de missiles de type antichar, voire de type antinavire léger. Ceci entraine donc une limitation en courte/moyenne portée de ce type de missile.

Par ailleurs, on connaît, par le document FR - 2 649 757, un système destiné à propulser un missile. Ce système de propulsion comporte un accélérateur et un turboréacteur. L'accélérateur est intégré dans la partie arrière du turboréacteur et est pourvu d'une charge. Le système de propulsion comporte également un tube de propagation de flamme qui s'étend de l'accélérateur jusqu'à la chambre de combustion du turboréacteur.

La présente invention concerne un système de propulsion destiné à propulser un engin volant, de type mixte (c'est-à-dire avec deux types de propulseur différents), qui permet de remédier aux inconvénients précités.

A cet effet, selon l'invention, ledit système de propulsion du type comportant un accélérateur et un turboréacteur (qui comprend au moins un compresseur, une chambre de combustion, une turbine et une tuyère d'éjection),
est remarquable en ce que :
- ledit accélérateur est intégré dans la partie arrière dudit turboréacteur, ledit accélérateur comprenant une enceinte qui est fixée à un carter du turboréacteur en étant agencée selon l'axe longitudinal de ce dernier, qui est munie d'une tuyère à l'arrière, et qui est pourvue d'au moins une charge et de moyens de déclenchement de ladite charge ; et
- ledit système de propulsion comporte de plus :
   - au moins un premier tube de piquage de gaz qui est relié à l'accélérateur et qui est destiné à l'allumage de la chambre de combustion ; et
   - au moins un second tube de piquage de gaz qui est également relié à l'accélérateur et qui est destiné au démarrage de la turbine.

Ainsi, grâce à l'invention, on intègre, c'est-à-dire on monte à poste fixe, de la manière précisée ci-dessous, au niveau de la tuyère du turboréacteur, un accélérateur muni d'une charge qui fonctionne sans éjection de parties mécaniques lourdes. Ainsi, ce système de propulsion permet de remédier aux inconvénients précités, et est notamment particulièrement bien adapté à une utilisation sur un missile antichar ou antinavire léger, pour un emploi sur un théâtre d'opérations tactiques. En effet, grâce à l'invention, on me met pas en danger les troupes amies au terme de la phase d'accélération mise en oeuvre par ledit accélérateur du système de propulsion, en raison de l'absence d'éjection de parties mécaniques, excepté un opercule très léger (généralement de l'ordre de 10 grammes) provenant de façon usuelle de l'accélérateur et ne présentant aucun danger important.

De plus, on prévoit un agencement de tubes de piquage de gaz qui permettent de cumuler les fonctions d'allumage du turboréacteur et de démarrage de la turbine, qui sont mises en oeuvre, dans le cas usuel, par des équipements séparés (bougies pyrotechnique d'allumage et cartouche pyrotechnique de démarrage, généralement), ce qui facilite la réalisation et la mise en oeuvre de ces fonctions.

En outre, par l'intégration de l'enceinte de l'accélérateur dans l'axe du turboréacteur, comme précisé ci-dessous, la présente invention permet de limiter les problématiques de désaxement de poussée inhérents aux solutions usuelles à accélérateurs désaxés (accélérateurs latéraux ou décalés).

Dans un mode de réalisation préféré, l'enceinte de l'accélérateur est fixée à un carter arrière du turboréacteur par l'intermédiaire de bras qui sont répartis de façon régulière autour de la périphérie de l'axe longitudinal du turboréacteur. Dans ce cas, de préférence, lesdits premier et second tubes de piquage de gaz traversent au moins certains desdits bras, ce qui permet notamment de faciliter la réalisation et de réduire l'encombrement.

En outre, dans un mode de réalisation préféré, l'enceinte de l'accélérateur est de forme cylindrique, et la tuyère d'éjection du turboréacteur entoure ladite enceinte de manière à définir un espace annulaire autour de cette dernière, qui est destiné à l'éjection des gaz du turboréacteur.

Ce mode de réalisation préféré permet de limiter les pertes liées à l'allongement de la tuyère d'éjection et de limiter la trainée d'arrière-corps et l'obstruction thermique liée au gaz chauds de l'accélérateur pendant la phase d'accélération.

Dans ce mode de réalisation préféré, de façon avantageuse, ledit accélérateur dépasse ladite tuyère d'éjection vers l'arrière, ce qui permet en particulier d'éviter que les gaz éjectés par l'accélérateur perturbent le fonctionnement du turboréacteur après l'accélération.

Pour cette même raison, de façon avantageuse, la tuyère de l'accélérateur est agencée de sorte que son axe de symétrie est confondu avec l'axe longitudinal du turboréacteur, et ladite tuyère s'évase vers l'arrière et présente un angle d'ouverture permettant à un gaz éjecté à travers ladite tuyère d'atteindre un gaz éjecté par la tuyère d'éjection du turboréacteur, à l'arrière du système de propulsion, au minimum à une distance prédéterminée.

En outre, de façon avantageuse, la charge de l'accélérateur présente au moins un canal, central ou périphérique, pour la circulation des gaz de combustion vers ladite tuyère de l'accélérateur et pour l'alimentation des piquages de gaz.

Comme indiqué ci-dessous, le système de propulsion conforme à l'invention est particulièrement bien adapté à une utilisation sur un missile antichar (ou un missile antinavire léger) qui, de façon usuelle, est éjecté d'un tube de lancement lors d'un tir. Pour mettre en oeuvre une telle éjection d'un tube de lancement, le système de propulsion conforme à l'invention comporte, avantageusement, de plus, des moyens d'éjection qui sont agencés à l'arrière de l'accélérateur.

Dans un mode de réalisation préféré, lesdits moyens d'éjection comportent un accélérateur auxiliaire pourvu une pluralité de tuyères individuelles qui sont agencées autour et radialement à l'extérieur de la tuyère de l'accélérateur et qui sont réparties de façon régulière autour de la périphérie de ladite tuyère. De plus, pour accélérer la combustion et pouvoir atteindre rapidement des vitesses élevées, ledit accélérateur auxiliaire comprend, avantageusement, une charge à couronnes concentriques, qui forment entre elles des canaux destinés à l'éjection des gaz de combustion.

Lors du tir d'un missile tel que précité, le système de propulsion conforme à la présente invention permet donc de réaliser les trois phases successives suivantes :
- une phase initiale d'éjection du missile hors du tube de lancement, qui est mise en oeuvre par lesdits moyens d'éjection ;
- une phase d'accélération après l'éjection du missile, qui est mise en oeuvre par ledit accélérateur ; et
- une phase de croisière mise en oeuvre par le turboréacteur, lorsque une vitesse prédéterminée est atteinte.

La présente invention concerne également un engin volant, en particulier un missile anti-char, ou un missile antinavire léger.

Selon l'invention, ledit engin volant comporte un système de propulsion de type mixte, tel que celui précité, combinant un accélérateur et un turboréacteur.

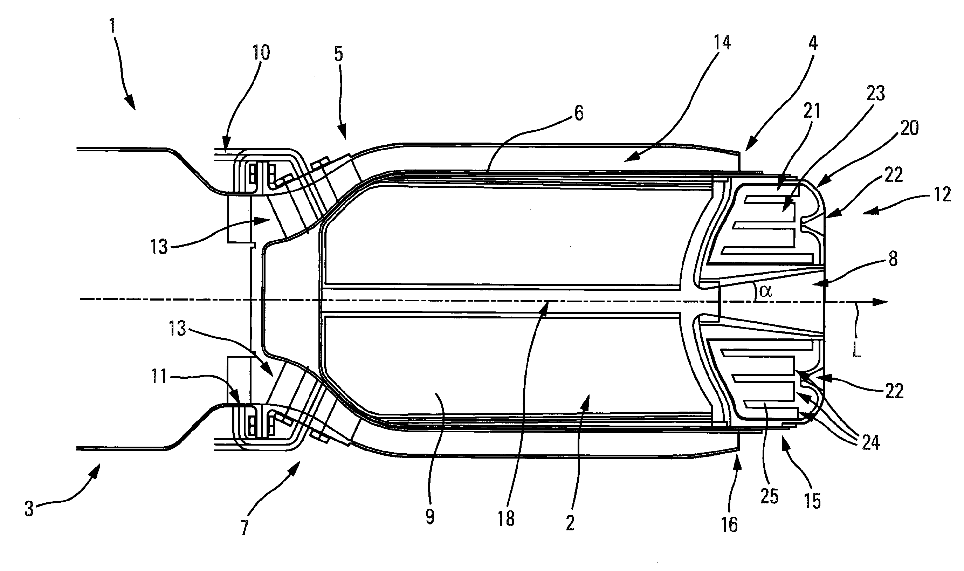

L'unique figure du dessin annexé fera bien comprendre comment l'invention peut être réalisée. Cette figure unique est une vue schématique, en coupe, d'un système de propulsion conforme à l'invention.

Le système de propulsion 1 conforme à l'invention et représenté sur la figure est agencé à l'arrière d'un engin volant (non représenté), en particulier d'un missile anti-char ou d'un missile antinavire léger, et est destiné à propulser cet engin volant.

Ce système de propulsion 1 est du type mixte comportant à la fois un accélérateur 2 et un turboréacteur 3. Le turboréacteur 3 comprend, de façon usuelle, au moins un compresseur, une chambre de combustion, une turbine et une tuyère d'éjection 4.

Selon l'invention, ledit accélérateur 2 qui fait partie d'un dispositif d'accélération 12 est intégré dans la partie arrière 5 dudit turboréacteur 3. Plus précisément, ledit accélérateur 2 comprend une enceinte 6 qui est fixée à un carter 7 du turboréacteur 3, en étant agencée le long de l'axe longitudinal L de ce dernier. Cette enceinte 6 est munie d'une tuyère 8 unique à l'arrière et elle est pourvue d'au moins une charge 9, ainsi que de moyens de déclenchement usuels (non représentés) de ladite charge 9.

Ainsi, grâce à l'invention, on intègre au niveau de la tuyère d'éjection 4 du turboréacteur 3 un accélérateur 2 qui fonctionne sans éjection de parties mécaniques lourdes. De ce fait, le système de propulsion 1 est, notamment, particulièrement bien adapté à une utilisation sur un missile antichar ou antinavire léger, pour un emploi sur un théâtre d'opérations tactiques. En effet, grâce à l'invention, on me met pas en danger les troupes amies au terme de la phase d'accélération mise en oeuvre par ledit accélérateur 2, en raison de l'absence d'éjection de parties mécaniques, excepté un opercule très léger (généralement de l'ordre de 10g), dont l'éjection ne présente aucun danger. Cet opercule, généralement métallique, ferme de façon usuelle l'ouverture d'éjection des gaz de l'accélérateur 2 et est automatiquement expulsé lorsqu'une pression donnée est atteinte dans l'enceinte 6 après l'allumage de la charge 9.

De plus, par l'intégration de l'enceinte 6 de l'accélérateur 2 dans l'axe L du turboréacteur 3, on limite les problématiques de désaxement de poussée inhérents aux solutions usuelles à accélérateurs désaxés (accélérateurs latéraux ou décalés).

Par ailleurs, le système de propulsion 1 conforme à l'invention comporte de plus :
- au moins un, mais de préférence deux tubes de piquage de gaz 10 qui sont reliés à l'accélérateur 2 et qui sont destinés à l'allumage de la chambre de combustion du turboréacteur 3. Ces tubes de piquage de gaz 10 débouchent dans le tube à flamme de la chambre de combustion en affleurant la paroi interne ; et
- au moins un, mais de préférence deux tubes de piquage de gaz 11 qui sont également reliés à l'accélérateur 2 et qui sont destinés au démarrage de la turbine du turboréacteur 3. Ces tubes de piquage de gaz 11 sont tangentiels au carter et débouchent en affleurant au niveau des têtes de pales de la roue de la turbine.

Ces tubes de piquage de gaz 10 et 11 permettent de cumuler les fonctions d'allumage du turboréacteur 3 et de démarrage de la turbine, qui sont mises en oeuvre, usuellement, par des équipements séparés (bougies pyrotechnique d'allumage et cartouche pyrotechnique de démarrage, généralement). Cette solution facilite la réalisation et la mise en oeuvre de ces fonctions. Elle utilise la mise en pression de l'enceinte 6. Les piquages fonctionnent en utilisant la différence de pression entre l'amont (chambre de combustion et turbine) et l'aval (intérieur de l'enceinte 6).

Dans un mode de réalisation préféré, l'enceinte 6 de l'accélérateur 2 est fixée à un carter arrière 7 du turboréacteur 3 par l'intermédiaire de bras 13, de préférence quatre bras 13, qui sont répartis de façon régulière autour de la périphérie de l'axe longitudinal L du turboréacteur 3. Dans ce cas, de préférence, lesdits tubes de piquage de gaz 10 et 11 traversent au moins certains desdits bras 13, ce qui permet notamment de réduire l'encombrement.

Par ailleurs, l'enceinte 6 de l'accélérateur 2 est de forme cylindrique, et la tuyère d'éjection 4 du turboréacteur 3 entoure ladite enceinte 6 de manière à définir un espace annulaire 14 autour de cette dernière, qui est destiné à l'éjection des gaz du turboréacteur 3. Cet agencement permet de limiter les pertes liées à l'allongement de la tuyère d'éjection 4 et de limiter la trainée d'arrière-corps et l'obstruction thermique liée au gaz chauds de l'accélérateur 2 pendant la phase d'accélération.

De plus, comme représenté sur la figure, la partie aval 15 du dispositif d'accélération 12 dépasse, vers l'arrière, la partie aval 16 de la tuyère d'éjection 4, ce qui permet en particulier d'éviter que les gaz éjectés par le dispositif d'accélération 12 perturbent le fonctionnement du turboréacteur 3 après l'accélération.

De plus, la tuyère 8 de l'accélérateur 2 est agencée de sorte que son axe de symétrie est confondu avec l'axe longitudinal L du turboréacteur 3, et ladite tuyère 8 s'évase vers l'arrière et présente un angle d'ouverture α permettant à un gaz éjecté à travers ladite tuyère 8 d'atteindre un gaz éjecté par la tuyère d'éjection 4 du turboréacteur 3, à l'arrière du système de propulsion 1, au minimum à une distance prédéterminée qui est telle qu'elle permet d'éviter que les gaz éjectés par l'accélérateur 2 perturbent le fonctionnement du turboréacteur 3 après l'accélération.

En outre, la charge 9 de l'accélérateur 2 présente au moins un canal 18, central ou périphérique, pour la circulation des gaz de combustion vers ladite tuyère 8 de l'accélérateur 2 et pour l'alimentation des piquages de gaz 10 et 11.

Comme indiqué ci-dessous, le système de propulsion 1 conforme à l'invention est particulièrement bien adapté à une utilisation sur un missile antichar (ou un missile antinavire léger) qui, de façon usuelle, est éjecté d'un tube de lancement (non représenté) lors d'un tir. Pour mettre en oeuvre une telle éjection d'un tube de lancement, le dispositif d'accélération 12 du système de propulsion 1 conforme à l'invention comporte, de plus, des moyens d'éjection 20 qui sont agencés à l'arrière de l'accélérateur 2 et qui sont destinés à l'éjection du missile de son tube de lancement. Ces moyens d'éjection 20 sont pourvus d'au moins une charge 23, ainsi que de moyens de déclenchement usuels (non représentés) de ladite charge 23.

Dans un mode de réalisation préféré, lesdits moyens d'éjection 20 comportent un accélérateur auxiliaire 20 pourvu une pluralité de tuyères individuelles 22 qui sont agencées autour et radialement à l'extérieur de la tuyère 8 centrale de l'accélérateur 2 et qui sont réparties de façon régulière autour de la périphérie de ladite tuyère 8. De plus, pour accélérer la combustion et pouvoir atteindre rapidement des vitesses élevées, ledit accélérateur auxiliaire 20 comprend une charge 23 à couronnes concentriques 24, qui forment entre elles des canaux 25 destinés à l'éjection des gaz de combustion.

Le dispositif d'accélération 12 est donc constitué de deux parties, à savoir :
- une partie aval (moyens d'éjection 20) dédiée à l'éjection et la mise en vitesse pour la sortie d'un tube de lancement ; et
- une partie amont (accélérateur 2) pour la phase d'accélération.

Les charges 9 et 23 de l'accélérateur 2 et des moyens d'éjection 20 peuvent comporter un même propergol, par exemple du butalane 82/4. Toutefois les architectures de ces charges 9 et 23 sont différentes. De préférence :
- la charge 23 destinée à l'éjection est adaptée à un temps de combustion court, et comprend, par exemple, une charge moulée-collée à couronnes concentriques 24 obtenues par poinçonnage. De plus, les moyens d'éjection 20 sont équipés d'un fond arrière avec plusieurs tuyères individuelles 22. La forme extérieure du fond arrière peut aisément être adaptée aux contraintes d'encombrement et d'aérodynamique, propres au turboréacteur 3 et/ou au missile ; et
- la charge 9 destinée à l'accélération est adaptée à un temps de combustion long, et comprend, par exemple, une charge à combustion frontale, collée sur le fond avant, ou mieux sur le fond arrière, et présentant un canal central 18 pour la circulation des gaz de combustion vers l'unique tuyère centrale 8 et vers les tubes de piquage de gaz 10 et 11 pour l'entraînement de la turbine et l'allumage du turboréacteur 3. La forme extérieure du fond avant peu aisément être adaptée aux contraintes d'encombrement et d'aérodynamique interne, propres à l'arrière-corps du turboréacteur 3.

Lors du tir d'un missile tel que précité, le système de propulsion 1 conforme à la présente invention permet donc de mettre en oeuvre les trois phases successives suivantes :
- une phase initiale d'éjection du missile hors du tube de lancement, qui est mise en oeuvre par lesdits moyens d'éjection 20 ;
- une phase d'accélération mise en oeuvre par ledit accélérateur 2, après l'éjection du missile ; et
- une phase de croisière mise en oeuvre par le turboréacteur 3, lorsqu'une vitesse prédéterminée est atteinte par le missile.

A titre d'illustration, ledit dispositif d'accélération 12 intégré, monté sur un missile, peut fonctionner pendant une durée comprise entre 5 et 10 secondes avec une phase d'éjection comprise entre 0,1 et 0,3 secondes. Pour une application de type anti-char, le bilan de poussée peut être le suivant :
- éjection : masse de propergol 0,2 à 0,5 kg ; IFt 0,3 à 1 kN.s ; Fmoyen 2000 à 10000 N ;
- accélération : masse de propergol 1,5 à 3 kg ; IFt 3 à 6 kN.s ; Fmoyen 500 à 1000 N ;
- croisière: masse à vide 3 à 5 kg ; Fmoyen 200 à 400 N.

## Revendications

1. Système de propulsion destiné à propulser un engin volant, en particulier un missile anti-char, ledit système de propulsion (1) comportant un accélérateur (2) et un turboréacteur (3) qui comprend au moins un compresseur, une chambre de combustion, une turbine et une tuyère d'éjection (4), où
- ledit accélérateur (2) est intégré dans la partie arrière (5) dudit turboréacteur (3), ledit accélérateur (2) comprenant une enceinte (6) qui est fixée à un carter (7) du turboréacteur (3) en étant agencée selon l'axe longitudinal (L) de ce dernier, qui est munie d'une tuyère (8) à l'arrière, et qui est pourvue d'au moins une charge (9) et de moyens de déclenchement de ladite charge (9) ; et
- ledit système de propulsion (1) comporte de plus :
- au moins un premier tube de piquage de gaz (10) qui est relié à l'accélérateur (2) et qui est destiné à l'allumage de la chambre de combustion ; et
**caractérisé en ce que** :
- au moins un second tube de piquage de gaz (11) qui est également relié à l'accélérateur (2) et qui est destiné au démarrage de la turbine.

2. Système selon la revendication 1,
**caractérisé en ce que** ladite enceinte (6) de l'accélérateur (2) est fixée à un carter arrière (7) du turboréacteur (3) par l'intermédiaire de bras (13) qui sont répartis de façon régulière autour de la périphérie de l'axe longitudinal (L) du turboréacteur (3).

3. Système selon la revendication 2,
**caractérisé en ce que** lesdits premier et second tubes de piquage de gaz (10, 11) traversent au moins certains desdits bras (13).

4. Système selon l'une quelconque des revendications 1 à 3,
**caractérisé en ce que** l'enceinte (6) dudit accélérateur (2) est de forme cylindrique, et **en ce que** ladite tuyère d'éjection (4) du turboréacteur (3) entoure ladite enceinte (6) de manière de manière à définir un espace annulaire (14) autour de cette dernière, qui est destiné à l'éjection des gaz du turboréacteur (3).

5. Système selon la revendication 4,
**caractérisé en ce que** ledit accélérateur (2) dépasse ladite tuyère d'éjection (4) vers l'arrière.

6. Système selon l'une des revendications 4 et 5,
**caractérisé en ce que** ladite tuyère (8) de l'accélérateur (2) est agencée de sorte que son axe de symétrie est confondu avec l'axe longitudinal (L) du turboréacteur (3), et **en ce que** ladite tuyère (8) s'évase vers l'arrière et présente un angle d'ouverture (α) permettant à un gaz éjecté à travers ladite tuyère (8) d'atteindre un gaz éjecté par la tuyère d'éjection (4) du turboréacteur (3), à l'arrière du système de propulsion (1), au minimum à une distance prédéterminée.

7. Système selon l'une quelconque des revendications 1 à 6,
**caractérisé en ce que** ladite charge (9) de l'accélérateur (2) présente au moins un canal central (18).

8. Système selon l'une quelconque des revendications 1 à 6,
**caractérisé en ce que** ladite charge (9) de l'accélérateur (2) présente au moins un canal périphérique.

9. Système selon l'une quelconque des revendications 1 à 8,
**caractérisé en ce qu'**il comporte, de plus, des moyens d'éjection (20) agencés à l'arrière de l'accélérateur (2).

10. Système selon la revendication 9,
**caractérisé en ce que** lesdits moyens d'éjection (20) comportent un accélérateur auxiliaire (21) pourvu une pluralité de tuyères individuelles (22) qui sont agencées autour et radialement à l'extérieur de la tuyère (8) de l'accélérateur (2) et qui sont réparties de façon régulière autour de la périphérie de ladite tuyère (8).

11. Système selon la revendication 10,
**caractérisé en ce que** ledit accélérateur auxiliaire (21) comprend au moins une charge (23) à couronnes concentriques (24).

12. Engin volant, en particulier missile anti-char,
**caractérisé en ce qu'**il comporte un système de propulsion (1) tel que celui spécifié sous l'une quelconque des revendications 1 à 11.

## Patentansprüche

1. Antriebssystem, das dazu bestimmt ist, ein Fluggerät anzutreiben, insbesondere einen Panzerabwehrflugkörper, wobei das Antriebssystem (1) einen Beschleuniger (2) und einen Turboreaktor (3) umfasst, der mindestens einen Verdichter, eine Brennkammer, eine Turbine und eine Schubdüse (4) aufweist, wobei
- der Beschleuniger (2) in den hinteren Teil (5) des Turboreaktors (3) integriert ist, wobei der Beschleuniger (2) einen Einschluss (6) aufweist, der an einem Gehäuse (7) des Turboreaktors (3) befestigt ist, wobei er entlang der Längsachse (L) dieses Letzteren angeordnet ist, die hinten mit einer Düse (8) versehen ist, und mit mindestens einer Charge (9) und Auslösemitteln der Charge (9) versehen ist, und
- das Antriebssystem (1) ferner Folgendes umfasst:
- mindestens ein erstes Gasabzweigrohr (10), das mit dem Beschleuniger (2) verbunden und zum Zünden der Brennkammer bestimmt ist, und
**dadurch gekennzeichnet, dass**:
- mindestens ein zweites Gasabzweigrohr (11) ebenfalls mit dem Beschleuniger (2) verbunden und zum Starten der Turbine bestimmt ist.

2. System nach Anspruch 1,
**dadurch gekennzeichnet, dass** der Einschluss (6) des Beschleunigers (2) an einem hinteren Gehäuse (7) des Turboreaktors (3) über Armen (13) befestigt ist, die regelmäßig um den Umfang der Längsachse (L) des Turboreaktors (3) verteilt sind.

3. System nach Anspruch 2,
**dadurch gekennzeichnet, dass** das erste und das zweite Gasabzweigrohr (10, 11) mindestens einige Armen (13) durchqueren.

4. System nach einem der Ansprüche 1 bis 3,
**dadurch gekennzeichnet, dass** der Einschluss (6) des Beschleunigers (2) zylindrische Form hat, und dass die Schubdüse (4) des Turboreaktors (3) den Einschluss (6) derart umgibt, dass einen Ringraum (14) um diesen Letzteren, der zum Ausstoßen der Gase des Turboreaktors (3) bestimmt ist, definiert ist.

5. System nach Anspruch 4,
**dadurch gekennzeichnet, dass** der Beschleuniger (2) über die Schubdüse (4) nach hinten hinaus reicht.

6. System nach einem der Ansprüche 4 und 5,
**dadurch gekennzeichnet, dass** die Düse (8) des Beschleunigers (2) derart eingerichtet ist, dass ihre Symmetrieachse mit der Längsachse (L) des Turboreaktors (3) zusammenfällt, und dass sich die Düse (8) nach hinten aufweitet und einen Öffnungswinkel aufweist, der es einem Gas, das durch die Düse (8) ausgestoßen wird, erlaubt ein Gas, das von der Schubdüse (4) des Turboreaktors (3) ausgeworfen wird, hinter dem Antriebssystem (1) mindestens in einer vorbestimmten Entfernung zu erreichen.

7. System nach einem der Ansprüche 1 bis 6,
**dadurch gekennzeichnet, dass** die Charge (9) des Beschleunigers (2) mindestens einen zentralen Kanal (18) aufweist.

8. System nach einem der Ansprüche 1 bis 6,
**dadurch gekennzeichnet, dass** die Charge (9) des Beschleunigers (2) mindestens einen umfänglichen Kanal aufweist.

9. System nach einem der Ansprüche 1 bis 8,
**dadurch gekennzeichnet, dass** es außerdem Ausstoßmitteln (20) umfasst, die hinter dem Beschleuniger (2) angeordnet sind.

10. System nach Anspruch 9,
**dadurch gekennzeichnet, dass** die Ausstoßmitteln (20) einen Hilfsbeschleuniger (21) umfassen, der mit einer Mehrzahl einzelner Düsen (22) versehen ist, die um und radial außerhalb der Düse (8) des Beschleunigers (2) angeordnet sind, und die regelmäßig um den Umfang der Düse (8) verteilt sind.

11. System nach Anspruch 10,
**dadurch gekennzeichnet, dass** der Hilfsbeschleuniger (21) mindestens eine Charge (23) mit konzentrischen Kränzen (24) umfasst.

12. Fluggerät, insbesondere Panzerabwehrflugkörper,
**dadurch gekennzeichnet, dass** es ein Antriebssystem (1) wie das in einem der Ansprüche 1 bis 11 spezifizierte umfasst.

## Claims

1. A propulsion system intended to propel a flying device, particularly an anti-tank missile, said propulsion system (1) comprising a booster (2) and a turbojet (3) which comprises at least a compressor, a combustion chamber, a turbine and an ejection nozzle (4),
**characterized in that**
- said booster (2) is incorporated into the rear part (5) of said turbojet (3), said booster (2) comprising a chamber (6) which is fixed to a casing (7) of the turbojet (3), by being positioned along the longitudinal axis (L) thereof, which is fitted with a nozzle (8) at the rear, and which is provided with at least one charge (9) and with means of initiating said charge (9); and
- said propulsion system (1) additionally comprises:
- at least one first gas bleed tube (10) which is connected to the booster (2) and which is intended to ignite the combustion chamber; and
- at least one second gas bleed tube (11) which is also connected to the booster (2) and which is intended to start the turbine.

2. The system as claimed in claim 1,
**characterized in that** said chamber (6) of the booster (2) is fixed to a rear casing (7) of the turbojet (3) by arms (13) which are uniformly distributed about the periphery of the longitudinal axis (L) of the turbojet (3).

3. The system as claimed in claim 2,
**characterized in that** said first and second gas bleed tubes (10, 11) pass at least through some of said arms (13).

4. The system as claimed in any one of claims 1 to 3, **characterized in that** the chamber (6) of said booster (2) is of cylindrical shape, and **in that** said ejection nozzle (4) of the turbojet (3) surrounds said chamber (6) in such a way as to define an annular space (14) around the latter, which space is intended for the ejection of the gases from the turbojet (3).

5. The system as claimed in claim 4,
**characterized in that** said booster (2) protrudes rearwards beyond said ejection nozzle (4) .

6. The system as claimed in either of claims 4 and 5,
**characterized in that** said nozzle (8) of the booster (2) is arranged in such a way that its axis of symmetry coincides with the longitudinal axis (L) of the turbojet (3), and **in that** said nozzle (8) widens toward the rear and has an angle of divergence (α) that allows a gas ejected through said nozzle (8) to reach a gas ejected by the ejection nozzle (4) of the turbojet (3), at the rear of the propulsion system (1), at minimum a preset distance away.

7. The system as claimed in any of claims 1 to 6,
**characterized in that** said charge (9) of the booster (2) has at least one central passage (18).

8. The system as claimed in any of claims 1 to 6,
**characterized in that** said charge (9) of the booster (2) has at least one peripheral passage.

9. The system as claimed in any one of claims 1 to 8,
**characterized in that** it additionally comprises ejection means (20) arranged at the rear of the booster (2).

10. The system as claimed in claim 9,
**characterized in that** said ejection means (20) comprise an auxiliary booster (21) provided with a plurality of individual nozzles (22) which are arranged around and radially on the outside of the nozzle (8) of the booster (2) and which are evenly distributed around the periphery of said nozzle (8).

11. The system as claimed in claim 10,
**characterized in that** said auxiliary booster (21) comprises at least one charge (23) comprising concentric rings (24).

12. A flying device, particularly an anti-tank missile, **characterized in that** it comprises a propulsion system (1) like the one specified in any of claims 1 to 11.
